# EUROPÄISCHE PATENTANMELDUNG

(11) **EP 2 708 872 A1**
(43) Veröffentlichungstag der Anmeldung: **19.03.2014**
(21) Anmeldenummer: 12006547.9
(22) Anmeldetag: 18.09.2012
(51) Int. Cl.: G01N 21/53

(54) **Verfahren und Vorrichtung zur Erkennung von sich bewegenden Objekten in einem Gasstrom**

(71) Anmelder: Linde Aktiengesellschaft, 80331 Munich (DE)
(72) Erfinder: Moll, Anton, 82399 Raisting (DE); Schlichting, Joachim, 81371 München (DE)
(74) Vertreter: Imhof, Dietmar

(57) **Zusammenfassung**

Die Erfindung betrifft ein Vorrichtung und ein Verfahren zum Überwachen eines Gasstroms. Der durch ein Rohr (1) oder einen Behälter geleitete Gasstrom wird von einem Lichtemitter (10, 17) zum Aussenden von Licht bestrahlt. Ein Lichtsensor (11) und ein Streulichtdetektor (12) jeweils zum Erfassen einer Signalstärke von Licht sind so ausgerichtet, dass ein vom Lichtemitter ausgesandter, ungestreuter Lichtstrahl (100, 101, 110, 120) das Rohr oder den Behälter durchkreuzen und direkt auf den Lichtsensor (11), nicht aber auf den Streulichtdetektor (12) fallen kann, und dass ein Lichtstrahlanteil (102) eines vom Lichtemitter ausgesandten Lichtstrahls (100) auf den Streulichtdetektor (12) fällt, wenn der Lichtstrahlanteil von einem Objekt (2) im Gasstrom in Richtung des Streulichtdetektors gestreut wird.

## Beschreibung

Die Erfindung betrifft eine Vorrichtung und ein Verfahren zum Überwachen eines Gasstroms.

In Direktkontaktapparaten wie z.B. Kolonnen oder Packungssäulen, aber auch bei Siedevorgängen stehen gasförmige und flüssige Phasen in direktem Kontakt. Dabei kann es zum Tropfenmitriss, also einem Mitführen von kleinen Tröpfchen oder Nebel durch den Gasstrom kommen. Dieses Austragen der flüssigen Phase ist in der Regel unerwünscht. Zur Verhinderung des Tropfenmitrisses kommen Tropfenabscheider, wie z.B. prallblechbasierte Abscheider wie Lamellenabscheider, Gestrickabscheider, Schwerkraftabscheider oder Zyklonabscheider, zum Einsatz. Arbeitet der Tropfenabscheider nicht ordnungsgemäß, kommt es zu einem Tropfenmitriss. Dies kann zu schwerwiegenden Schäden an dahinter folgenden Anlagenteilen führen, die auf eine Gasströmung ohne Flüssigkeitsanteil angewiesen sind.

Eine regelmäßige Überwachung des Abscheiders, also eine Detektion von Tropfenmitriss, kommt nur bei Gestrickabscheidern zum Einsatz. Dabei macht man sich die Eigenschaft des Drahtgestricks zunutze, dass sich vor einem starken Anstieg eines Wassermitrisses aus dem Gestrick heraus zuerst eine Wassersprudelschicht im unteren Bereich des Gestricks ausbildet. Diese Wassersprudelschicht erhöht den Druckverlust der Luft beim Durchströmen des Gestricks proportional zur Höhe der Sprudelschicht.

Die indirekte Überwachung von Wassermitriss über den Druckverlust weist den Nachteil auf, dass Schaum, der durch einen Gestrickabscheider nicht zurückgehalten werden kann, keinen nennenswerten Druckverlustanstieg zur Folge hat. Bei einer Entstehung von Schaum ist die Kontrolle daher unzureichend. Darüber hinaus können sich im Laufe der Zeit Verschmutzungen im Gestrick ablagern, beim Einsatz von Wasser beispielsweise Algen oder Kalk. Der Druckverlust über das Gestrick steigt dabei langsam und kontinuierlich an. Die Mitrissmenge erhöht sich mit zunehmender Verschmutzung des Gestricks, so dass sich ein Alarmgrenzwert für den Druckverlust stets nur vorübergehend angeben lässt. Bei anderen Typen von Abscheidern ist keine derart einfach zu realisierende Überwachung ihrer Funktion möglich. Hier können nur aus anderen Prozessparametern, wie z.B. der Temperatur hinter dem Abscheider oder dem Verhalten des Mediums in weiteren Verfahrensschritten, Rückschlüsse auf einen eventuellen Tropfenmitriss gezogen werden. Diese Methoden sind aber sehr fehleranfällig, weil auch eine Vielzahl anderer Gründe zu den genannten Abweichungen der Prozessparameter führen kann.

Zur direkten Erkennung von Tropfenmitriss in einem Gasstrom sind bislang nur aufwendige optische Messverfahren und -vorrichtungen mit rechnergestützer Mustererkennung kommerziell erhältlich. Die Erfindung hat daher die Aufgabe, eine einfache, effektive Möglichkeit zur Überwachung eines Gasstroms bereitzustellen, die ein direktes Erkennen von sich im Gasstrom bewegenden Objekten erlaubt.

Die Aufgabe wird gelöst durch eine Vorrichtung und ein Verfahren mit den Merkmalen der unabhängigen Patentansprüche.

Die erfindungsgemäße Vorrichtung zum Überwachen eines Gasstroms umfasst ein Rohr oder einen Behälter zum Durchleiten des Gasstroms, einen Lichtemitter zum Aussenden von Licht sowie einen Lichtsensor und einen Streulichtdetektor. Der Lichtsensor und der Streulichtdetektor sind jeweils geeignet, eine Signalstärke von Licht zu erfassen, wenn sie das Licht empfangen, d.h. wenn das Licht auf den Lichtsensor bzw. den Streulichtdetektor fällt.

Der Lichtsensor ist dabei zum Empfangen eines vom Lichtemitter ausgesandten, das Rohr oder den Behälter durchkreuzenden, ungestreuten Lichtstrahls ausgerichtet; das Durchkreuzen kann dabei beispielsweise in einer Richtung orthogonal zu einer Längsachse des Rohrs oder Behälters erfolgen, oder schräg zu einer Längsachse oder in Richtung einer Längsachse. Der Streulichtdetektor ist zum Empfangen eines gestreuten Lichtstrahlanteils eines vom Lichtemitter ausgesandten Lichtstrahls ausgerichtet.

Der Lichtemitter, der Lichtsensor und der Streulichtdetektor der erfindungsgemäßen Vorrichtung sind also vorzugsweise so ausgerichtet, dass ein vom Lichtemitter ausgesandter Lichtstrahl, wenn er nicht gestreut (d.h. abgelenkt) wird, das Rohr oder den Behälter durchkreuzen und direkt auf den Lichtsensor fallen kann, nicht aber auf den Streulichtdetektor. Wird hingegen ein vom Lichtemitter ausgesandter Lichtstrahl mindestens teilweise an einem Objekt im Gasstrom in die Richtung des Streulichtdetektors gestreut, fällt ein gestreuter Anteil des Lichtstrahls auf den Streulichtdetektor.

Das erfindungsgemäße Verfahren zum Überwachen eine Gasstroms umfasst ein Bestrahlen des Gasstroms mit einem Lichtstrahl, ein Messen (z.B. mit einem Lichtsensor) einer Signalstärke eines ungestreuten (d.h. nicht abgelenkten) Anteils des Lichtstrahls (die im folgenden als "erste Signalstärke" bezeichnet wird), und ein Messen (z.B. mit einem Streulichtdetektor) einer Streulichtsignalstärke als einer Signalstärke eines gestreuten Anteils des Lichtstrahls (die Streulichtsignalstärke kann also auch Null sein).

Sowohl beim Streulichtdetektor als auch beim Lichtsensor kann es sich um Lichtdetektoren handeln, die auch baugleich oder von demselben Typ sein können: Die unterschiedlichen Bezeichnungen wurden hier nur zur besseren Unterscheidbarkeit gewählt. Insbesondere kann der Streulichtdetektor in Bezug auf einen oder mehrere ggf. vorhandenen weiteren Lichtemitter ausgerichtet sein und fungieren wie der Lichtsensor bezüglich des ersten Lichtemitters, so dass er also eine Signalstärke eines vom weiteren Lichtemitter ausgesandten, ungestreuten Lichtstrahls erfassen kann. Analog kann der Lichtsensor so angeordnet und eingerichtet sein, dass er einen Streulichtanteil eines anderen, beispielsweise des weiteren Lichtemitters erfassen kann. Es können auch insgesamt mehr als zwei Lichtsensoren, die jeweils auch als Streulichtdetektoren fungieren können, zum Einsatz kommen.

Das sich bewegende Objekt kann beispielsweise ein festes Partikel (z.B. ein Aschepartikel) oder ein Flüssigkeitströpfchen, insbesondere ein Wassertröpfchen sein. Die Vorrichtung kann Teil einer Luftzerlegungsanlage und/oder eines Direktkontaktkühlers sein, und das Verfahren kann Teil eines Luftkühlungs- und/oder Luftzerlegungsprozesses sein.

Der Gasstrom kann somit erfindungsgemäß überwacht werden, indem eine Streuung eines ausgesandten Lichtstrahls erfasst wird. Der Lichtstrahl wird also von zwei Seiten her untersucht, nämlich im Hinblick auf seine Signalstärke einerseits in seine ursprüngliche, ungestreute Richtung und andererseits in eine gestreute Richtung. Im Gegensatz zu einer konventionellen Einweg-Lichtschranke, bei der aus einer Schwächung eines direkten Lichtsignals auf ein zwischen Sender und Empfänger vorhandenes Objekt geschlossen wird, ist der Grad einer Signalschwächung erfindungsgemäß nicht einziges Indiz für ein Objekt. Vielmehr wird darüber hinaus geprüft, ob der Lichtstrahl gestreut wird. Aufgrurid dieser doppelten Prüfung ist die erfindungsgemäße Vorrichtung deutlich weniger empfindlich gegenüber Ablagerungen oder altersbedingten Verschlechterungen als herkömmliche Lichtschranken. Entsprechendes gilt für das erfindungsgemäße Verfahren.

In einer bevorzugten Ausführungsform misst oder bestimmt der Streulichtdetektor eine Streulichtsignalstärke eines zu ihm hin gestreuten Lichtstrahlanteils. Vorzugsweise kann der Streulichtdetektor damit gegebenenfalls zwischen auf ihn fallendem Licht, das ein gestreuter Anteil eines vom Lichtemitter ausgesandten Lichtstrahls ist, und sonstigem einfallenden Licht (z.B. direkt oder von einem anderen Emitter stammendem, gestreutem Licht) unterscheiden. Damit kann die Vorrichtung eine Streuung zuverlässig erfassen und so ein sich mit dem Gasstrom bewegendes Objekt erkennen.

Vorzugsweise werden die vom Lichtsensor und vom Streulichtdetektor erfassten Signalstärken jeweils mit Schwellwerten verglichen. So kann die vom Lichtsensor gemessene Signalstärke (im Folgenden auch als "erste Signalstärke" bezeichnet) mit mindestens einem vorbestimmten Direktsignalschwellwert verglichen werden, und/oder die vom Streulichtdetektor gemessene Streulichtsignalstärke mit einem vorbestimmten Streusignalschwellwert. Die Vorrichtung kann eine Recheneinheit umfassen, die diesen Vergleich bzw. diese Vergleiche vornehmen kann.

Vermöge der Schwellwerte können Störfunktionen vermieden werden und eine gewünschte Genauigkeit der Erfassung eventuell vorhandener, sich mit dem Gasstrom bewegender Objekte eingestellt werden. Die Vorbestimmung des Direktsignal- und/oder des Streusignalschwellwerts kann vorzugsweise durch einen Anwender oder einen Automat erfolgen; die Vorrichtung kann dazu erforderliche Mittel umfassen. So ist eine Anpassung an eine gewünschte Genauigkeit oder an ein Alter der Vorrichtung möglich. Entsprechend umfasst eine bevorzugte Ausführungsform des Verfahrens ein Vorbestimmen des Direktsignal- und/oder des Streusignalschwellwerts. Beispielsweise kann der Direktsignalschwellwert so (niedrig) vorbestimmt werden oder worden sein, dass die Signalstärke eines ungestreuten Anteils eines Lichtstrahls nur dann unterhalb des Direktsignalschwellwerts liegt, wenn der Lichtstrahl ein Objekt (z.B. einen Flüssigkeitstropfen) einer gewissen Mindestgröße oder eine Mindestanzahl von Objekten passiert hat.

Die Vorrichtung kann eingerichtet sein, auf ein Vorhandensein eines Objekts im Gasstrom zu schließen, wenn sowohl die erste Signalstärke den vorbestimmten Direktsignalschwellwert unterschreitet als auch die Streulichtsignalstärke den vorbestimmten Streusignalschwellwert überschreitet. Die Bedeutung der Begriffe "unterschreiten" und "überschreiten" kann dabei jeweils so erweitert werden, dass sie Gleichheit einschließt.

Das Vorhandensein eines Objekts oder einer vorgegebenen Mindestanzahl oder -dichte von Objekten im Gasstrom kann einem Anwender signalisiert werden, beispielsweise durch einen akustischen Alarm oder eine visuelle Anzeige (z.B. in Form eines Lämpchens oder einer Displayanzeige). Alternativ oder zusätzlich kann das Vorhandensein als elektrisches Signal oder als Information in einer Recheneinheit verwendet werden, beispielsweise in einem Analysealgorithmus oder in einem automatischen Reaktionsprogramm wie z.B. einem Notfallprogramm. Die Vorrichtung erlaubt damit eine automatisierte oder von einem Anwender ausgehende Reaktion auf einen im Innern des Rohres oder Behälters gemessenen Vorgang. Sofern das von der Vorrichtung signalisierte Vorhandensein des Objekts, der Objekte oder Objektdichte unerwünscht oder sogar gefährlich ist, kann der Anwender oder das automatische Reaktionsprogramm beispielsweise eine Abschaltung einer Anlage, in die die Vorrichtung eingebunden ist, veranlassen oder eine Änderung mindestens eines Parameters ändern, der die Funktion der Anlage bestimmt.

Bevorzugt ist es, wenn die erste Signalstärke und die Streulichtsignalstärke jeweils mehrfach nacheinander oder kontinuierlich über einen Zeitraum hinweg gemessen werden. Die Recheneinheit kann dann jeweils das zeitliche Verhalten der beiden Lichtstärken analysieren, beispielsweise um eine Anzahl an oder eine Dichte von sich mit dem Gasstrom bewegenden Objekten zu bestimmen oder zu approximieren. Dazu kann die Recheneinheit geeignete Analysesoftware umfassen.

Der Lichtemitter hat vorzugsweise einen positiven Öffnungswinkel zum Ausstrahlen von Licht, so dass er also gleichzeitig Lichtstrahlen in verschiedene Richtung aussenden kann. Vorzugsweise deckt der Lichtsensor den gesamten vom Lichtemitter angeleuchteten Bereich ab. So kann mit dem Lichtemitter ein größerer Raum im Rohr oder Behälter ausgeleuchtet und überwacht werden, als wenn der Lichtemitter nur in eine einzige Richtung Licht aussendet. Der Öffnungswinkel kann beispielsweise 10°, 15° oder 20° betragen.

In einer bevorzugten Ausführungsform ist der Lichtemitter ein erster Lichtemitter und weist die Vorrichtung mindestens einen zweiten Lichtemitter auf. Dieser kann eingerichtet sein, Licht mit anderer Frequenz, zeitlich versetzt und/oder anders kodiert auszusenden als der erste Lichtemitter. Vorzugsweise sind der zweite Lichtemitter und der Streulichtdetektor so zueinander ausgerichtet, dass ein vom zweiten Lichtemitter ausgesandter, ungestreuter Lichtstrahl auf den vorgenannten Streulichtdetektor fallen kann. Der Streulichtdetektor kann dann also einerseits direkt vom zweiten Lichtemitter einfallendes Licht und andererseits gestreutes, vom ersten Lichtemitter ausgesandtes Licht erfassen. Insbesondere kann der Streulichtdetektor gegenüber dem zweiten Lichtemitter so fungieren wie der Lichtsensor gegenüber dem ersten Lichtemitter. Bei einer Lichtmodulation zwischen erstem und zweitem Lichtemitter kann der Streulichtdetektor vorzugsweise das jeweils detektierte Licht unterscheiden und so insbesondere Änderungen der jeweiligen Signalstärken von gestreutem Licht des ersten und von ungestreutem Licht des zweiten Lichtemitters detektieren und ggf. entsprechend den oben geschilderten Weisen interpretieren, beispielsweise mit entsprechenden Schwellwerten vergleichen. Diese Ausführungsform bietet insbesondere den Vorteil einer Überwachung eines größeren Raums im Rohr oder Behälter bei relativ geringer Anzahl an erforderlichen Detektoren.

Alternativ oder zusätzlich kann je mindestens ein zweiter Lichtemitter, Lichtsensor und Streulichtdetektor vorgesehen sein, die zueinander angeordnet sind wie oben für den (ersten) Lichtemitter, den (ersten) Lichtsensor und den (ersten) Lichtdetektor beschrieben ist. Erste und zweite Lichtemitter, Lichtsensoren und Streulichtdetektoren können um einen Umfang (z.B. auf einer gemeinsamen Ebene orthogonal zu einer Längsachse) des Rohrs oder Behälters versetzt angeordnet oder über dessen Länge verteilt sein. Dadurch ist eine umfassende Überwachung des Innern des Rohres oder Behälters möglich.

Vorteilhaft ist eine Verwendung der Vorrichtung bzw. ein Einsatz des Verfahrens zur Überwachung und/oder Regelung eines Tropfenabscheiders, eines Direktkontaktkühlers; eines Verdampfers, wo bei nicht vollständiger Verdampfung Tropfen mitgerissen werden; eines Massenkraftabscheiders (beispielsweise eines Zyklonabscheiders); eines Elektrofilters; eines Feststofffilters (beispielsweise eines Rußfilters) und/oder eines Gaswäschers.

Insbesondere kann die Vorrichtung (bzw. das Verfahren) zur Erkennung von festen Teilchen (wie z.B. Aschepartikeln) in Gasphasen eingesetzt werden, beispielsweise wenn sie (bzw. es) wie erwähnt zur Überwachung und/oder Regelung der genannten Filter verwendet wird.

Figurenbeschreibung
- Figur 1A: zeigt beispielhaft eine Anordnung von Lichtemitter, Lichtsensor und Streulichtdetektor gemäß einer Ausführungsform der vorliegenden Erfindung.
- Figur 1B: zeigt schematisch das Verhalten eines Lichtstrahls, der in einer Ausführungsform der erfindungsgemäßen Vorrichtung auf ein Objekt im Gasstrom trifft.
- Figur 2: zeigt eine Anordnung von mehreren Lichtemittern, Lichtsensoren und Streulichtdetektoren gemäß einer Ausführungsform der vorliegenden Erfindung.

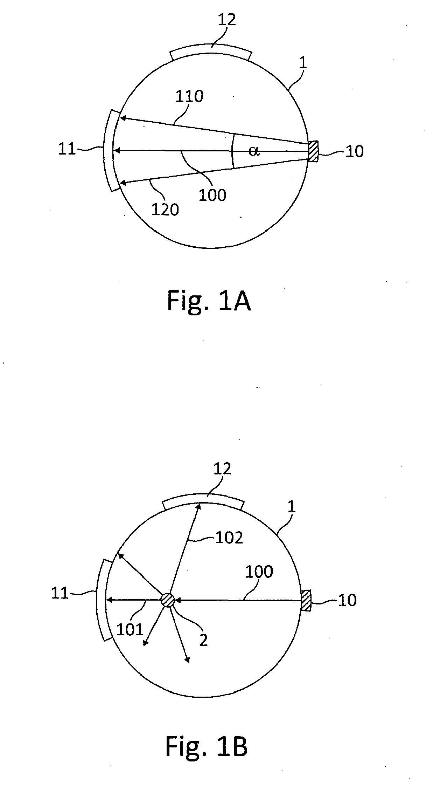

In der Figur 1A ist schematisch ein Querschnitt eines Rohres oder Behälters 1 gezeigt, an dem ein Lichtemitter 10, ein Lichtsensor 11 und ein Streulichtdetektor 12 angeordnet sind. Ein Gasstrom kann beispielsweise senkrecht zur dargestellten Querschnittsebene durch das Rohr bzw. den Behälter geleitet werden.

Der gezeigte Lichtemitter 10, der Lichtsensor 11 und der Streulichtdetektor 12 sind so zueinander angeordnet, dass ein vom Lichtemitter ausgesandter, ungestreuter Lichtstrahl 100, 101, 102 das Rohr oder den Behälter durchkreuzen und direkt auf den Lichtsensor 11, nicht aber auf den Streulichtdetektor fallen kann. Der Lichtemitter 10 hat einen Öffnungswinkel α, der der maximal mögliche Winkel zwischen zwei vom Lichtemitter ausgesandten Lichtstrahlen ist. Der gesamte vom Lichtemitter ausgeleuchtete Bereich wird vom Lichtsensor 11 abgedeckt, der die Signalstärke des einfallenden Lichtes erfassen kann.

In Figur 1 B ist ein Verhalten des Lichtstrahls 100 in der in Figur 1A dargestellten Anordnung gezeigt, wenn er in seinem Verlauf auf ein Objekt 4 trifft: Ein Anteil 101 des Lichtstrahls durchdringt dabei das Objekt 2 ungestreut und trifft auf den Lichtsensor 11. Die Signalstärke des Anteils 101 wird dabei im Vergleich zur Signalstärke des ursprünglichen Lichtstrahls 100 reduziert; der Lichtsensor 11 misst die verbleibende Signalstärke und vergleicht sie vorzugsweise mit einem Direktsignalschwellwerf. Weitere Anteile des Lichtstrahls 100 werden in verschiedene Richtungen gestreut. Insbesondere wird ein Anteil 102 des Lichtstrahls in Richtung des Streulichtdetektors 12 gestreut. Der Anteil 102 fällt auf den Streulichtdetektor, der nun die Signalstärke des Anteils 102 messen und vorzugsweise mit einem Streusignalschwellwert vergleichen kann.

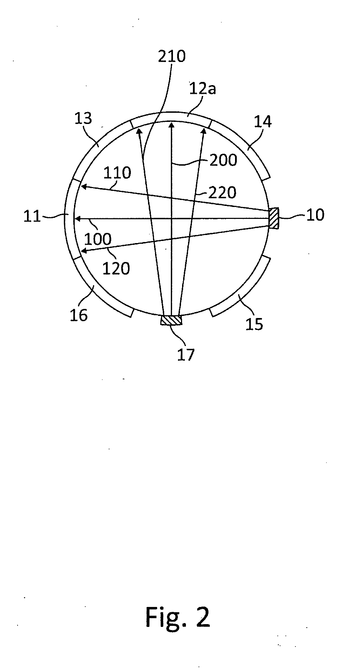

In Figur 2 ist eine Ausführungsform der vorliegenden Erfindung dargestellt, bei der neben dem ersten Lichtemitter 10 noch ein zweiter Lichtemitter 17 vorhanden ist. Der zweite Lichtemitter 17 ist eingerichtet, Lichtstrahlen 200, 210, 220 auszusenden, die das Rohr bzw. den Behälter durchkreuzen und, wenn sie nicht von einem dazwischenliegenden Objekt gestreut werden, auf den Lichtsensor 12A treffen. Der Lichtsensor 12A kann in Bezug auf den Lichtemitter 10 als Streulichtdetektor 12 fungieren. Vorzugsweise kann er dabei zwischen dem vom Lichtemitter 17 ausgesandten, ungestreuten Lichtstrahlen 200, 210, 220 und ggf. gestreuten Lichtstrahlanteilen (wie dem in Figur 1B gezeigten Lichtstrahlanteil 102) von vom ersten Lichtemitter 10 ausgesandten Lichtstrahlen 100, 101, 102 unterscheiden. Dies kann durch geeignete Modulation oder zeitliche Versetzung der ausgesandten Lichtstrahlen erreicht werden.

Die in Figur 2 gezeigte Vorrichtung weist zudem weitere Lichtdetektoren 13, 14, 15 und 16 auf, die mit den obigen Bezeichnungen in Bezug auf die Lichtemitter 10 und 17 jeweils als Lichtsensor und/oder als Streulichtdetektor eingerichtet sein können.

### Bezugszeichenliste:

- 1: Rohr oder Behälter zum Durchleiten eines Gasstroms
- 2: Objekt im Gasstrom
- 10: Lichtemitter
- 11: Lichtsensor
- 12: Streulichtdetektor
- 12A: Lichtsensor
- 13 - 16: Lichtdetektoren
- 17: Lichtdetektor
- 100, 110, 120: Lichtstrahlen
- 101, 102: Lichtstrahlanteile
- 200, 210, 220: Lichtstrahlen
- α: Einstrahlwinkel

## Patentansprüche

1. Vorrichtung zum Überwachen eines Gasstroms, die umfasst:
ein Rohr (1) oder einen Behälter zum Durchleiten des Gasstroms;
einen Lichtemitter (10, 17) zum Aussenden von Licht; sowie
einen Lichtsensor (11) und einen Streulichtdetektor (12) jeweils zum Erfassen einer Signalstärke von Licht;
wobei der Lichtsensor zum Empfangen eines vom Lichtemitter ausgesandten, das Rohr oder den Behälter durchkreuzenden, ungestreuten Lichtstrahls (100, 101, 110, 120) ausgerichtet ist,
und wobei der Streulichtdetektor zum Empfangen eines gestreuten Lichtstrahlanteils (102) eines vom Lichtemitter ausgesandten Lichtstrahls (100) ausgerichtet ist.

2. Vorrichtung gemäß Anspruch 1, wobei der Streulichtdetektor eingerichtet ist, eine Streulichtsignalstärke eines zum Streulichtdetektor gestreuten Lichtstrahlanteils zu messen.

3. Vorrichtung gemäß Anspruch 2, die eine Recheneinheit aufweist, die eingerichtet ist, eine vom Lichtsensor gemessene, erste Signalstärke mit mindestens einem vorbestimmten Direktsignalschwellwert und eine vom Streulichtdetektor gemessene Streulichtsignalstärke mit mindestens einem vorbestimmten Streusignalschwellwert zu vergleichen.

4. Vorrichtung gemäß Anspruch 3, wobei die Recheneinheit eingerichtet ist, auf Grundlage des Vergleichs von erster Signalstärke mit dem mindestens einen Direktsignalschwellwert und/oder des Vergleichs von Streulichtsignalstärke mit dem mindestens einen Streusignalschwellwert zu bestimmen, ob mindestens ein sich mit dem Gasstrom bewegendes Objekt (2) vorhanden ist,
wobei vorzugsweise die Vorrichtung eingerichtet ist, ein Vorhandensein eines Objekts im Gasstrom festzustellen, wenn sowohl die erste Signalstärke den vorbestimmten Direktsignalschwellwert unterschreitet als auch die Streulichtsignalstärke den vorbestimmten Streusignalschwellwert überschreitet.

5. Vorrichtung gemäß Anspruch 4, die eingerichtet ist, die erste Signalstärke und die Streulichtsignalstärke jeweils mehrfach nacheinander oder kontinuierlich über ein Zeitintervall hinweg zu messen, und wobei die Recheneinheit eingerichtet ist, aus einem Verhalten der ersfen Signalstärke und der Streulichtsignalstärke in Abhängigkeit von der Zeit eine Anzahl an oder eine Dichte von sich mit dem Gasstrom bewegenden Objekten zu bestimmen oder zu approximieren.

6. Vorrichtung gemäß einem der vorstehenden Ansprüche, wobei der Lichtemitter einen positiven Öffnungswinkel (α) zum Ausstrahlen von Licht hat, und wobei der gesamte vom Lichtemitter beleuchtete Bereich vom Lichtsensor 11 abgedeckt ist.

7. Vorrichtung gemäß einem der Ansprüche 1 bis 6, wobei der Lichtemitter (10) ein erster Lichtemitter ist,
und wobei die Vorrichtung weiterhin mindestens einen zweiten Lichtemitter (17) aufweist, der eingerichtet ist, Licht mit anderer Frequenz, zeitlich versetzt und/oder anders kodiert auszusenden als der erste Lichtemitter.

8. Vorrichtung gemäß Anspruch 7, wobei ein vom zweiten Lichtemitter ausgesandter, ungestreuter Lichtstrahl (200, 211, 220) das Rohr oder den Behälter (1) durchkreuzen und ungestreut auf den Streulichtdetektor (12) fallen kann,
und wobei die Vorrichtung eingerichtet ist, einen zum Streulichtdetektor gestreuten Lichtstrahlanteil (102) eines vom ersten Lichtemitter (10) ausgesandten Lichtstrahls von einem ungestreut vom zweiten Lichtemitter einfallenden Lichtstrahl (200, 210, 220) zu unterscheiden
und vorzugsweise eine dritte Signalstärke als eine Signalstärke eines ungestreut vom zweiten Lichtemitter auf den Streulichtdetektor fallenden Lichtstrahls (200, 210, 220) zu messen.

9. Vorrichtung gemäß einem der vorstehenden Ansprüche, wobei der Lichtemitter ein erster Lichtemitter (10), der Lichtsensor ein erster Lichtsensor (11) und der Streulichtdetektor ein erster Streulichtdetektor (13) ist,
und wobei die Vorrichtung weiterhin mindestens einen zweiten Lichtemitter (17), mindestens einen zweiten Lichtsensor (12A) und mindestens einen zweiten Streulichtdetektor (14, 15, 17) aufweist,
die vorzugsweise analog zum ersten Lichtemitter, Lichtsensor und Streulichtdetektor entsprechend einem der vorstehenden Ansprüche angeordnet und/oder eingerichtet sind.

10. Verfahren zum Überwachen eine Gasstroms, das umfasst:
Bestrahlen des Gasstroms mit einem Lichtstrahl (100, 110, 120);
Messen einer ersten Signalstärke eines ungestreuten Anteils (101) des Lichtstrahls; und
Messen einer Streulichtsignalstärke als einer Signalstärke eines gestreuten Anteils (102) des Lichtstrahls.

11. Verfahren gemäß Anspruch 10, das zudem umfasst:
Vergleichen der ersten Signalstärke mit mindestens einem vorbestimmten Direktsignalschwellwert und
Vergleichen der Streulichtsignalstärke mit mindestens einem vorbestimmten Streusignalschwellwert.

12. Verfahren gemäß Anspruch 11, das weiterhin umfasst:
Feststellen, dass die erste Signalstärke unterhalb des Direktsignalschwellwertes liegt;
Feststellen, dass die Streulichtsignalstärke oberhalb des Streusignalschwellwertes liegt; und
Signalisieren, dass ein sich mit dem Gasstrom bewegendes Objekt (2) vorhanden ist.

13. Verfahren gemäß Anspruch 12, wobei die beiden Schritte des Feststellens mehrfach wiederholt oder über einen Zeitraum hinweg kontinuierlich durchgeführt werden
und wobei das Verfahren zudem umfasst:
Bestimmen oder Approximieren einer Anzahl an sich mit dem Gasstrom bewegenden Objekten (2)
aus einem Verhalten der ersten Signalstärke in Abhängigkeit von der Zeit und/oder
aus einem Verhalten der Streulichtsignalstärke in Abhängigkeit von der Zeit.

14. Verfahren gemäß einem der Ansprüche 10 bis 13, wobei der Lichtstrahl ein erster Lichtstrahl (100, 110, 120) ist und das Verfahren weiterhin umfasst:
Bestrahlen des Gasstroms mit einem zweiten Lichtstrahl (200, 210, 220), wobei der zweite Lichtstrahl eine andere Frequenz aufweist als der erste Lichtstrahl, zeitlich zum ersten Lichtstrahl versetzt ausgesendet wird, anders als der erste Lichtstrahl kodiert, in eine andere Richtung als der erste Lichtstrahl und/oder von einem anderen Lichtemitter (17) als der erste Lichtstrahl ausgesandt wird.

15. Verfahren gemäß einem der Ansprüche 10 bis 14, das zur Überwachung und/oder Regelung
eines Tropfenabscheiders;
eines Direktkontaktkühlers;
eines Verdampfers, wo bei nicht vollständiger Verdampfung Tropfen mitgerissen werden;
eines Massenkraftabscheiders, beispielsweise eines Zyklonabscheiders;
eines Elektrofilters;
eines Feststofffilters, beispielsweise eines Rußfilters; und/oder
eines Gaswäschers
eingesetzt wird.
